# EUROPÄISCHE PATENTANMELDUNG

(11) **EP 4 520 420 A1**
(43) Veröffentlichungstag der Anmeldung: **12.03.2025**
(21) Anmeldenummer: 23195370.4
(22) Anmeldetag: 05.09.2023
(51) Int. Cl.: B01D 29/27, B01D 37/03, C02F 1/00

(54) **VORRICHTUNG ZUR BEREITSTELLUNG UND AUFBEREITUNG EINER FLÜSSIGKEIT, FILTERSACK, VERFAHREN ZUR HERSTELLUNG EINES FILTERSACKS UND VERWENDUNG**

(71) Anmelder: Hilti Aktiengesellschaft, 9494 Schaan (LI)
(72) Erfinder: Golubovic, Goran, 86807 Buchloe (DE)
(74) Vertreter: Hilti Aktiengesellschaft Corporate Intellectual Property

(57) **Zusammenfassung**

Die vorliegende Erfindung betrifft eine Vorrichtung zur Bereitstellung und Aufbereitung einer Flüssigkeit, wobei die Flüssigkeit in einem Inneren der Vorrichtung mit einem Filtersack gereinigt und von dem Filtersack aufgenommen werden kann. Dabei ist eine Innenseite des Filtersacks zumindest teilweise mit einem Flockungsmittel beschichtet. In weiteren Aspekten betrifft die Erfindung ein Verfahren zur Herstellung eines Filtersacks für eine solche Vorrichtung, sowie einen Filtersack und eine Verwendung eines solchen Filtersacks in einer Vorrichtung zur Bereitstellung und Aufbereitung einer Flüssigkeit. Mit der Erfindung können das Fassungsvermögen eines Filtersacks erheblich besser ausgenutzt und Austauschintervalle deutlich verlängert werden.

## Beschreibung

Die vorliegende Erfindung betrifft eine Vorrichtung zur Bereitstellung und Aufbereitung einer Flüssigkeit, wobei die Flüssigkeit in einem Inneren der Vorrichtung mit einem Filtersack gereinigt und von dem Filtersack aufgenommen werden kann. Dabei ist eine Innenseite des Filtersacks zumindest teilweise mit einem Flockungsmittel beschichtet. In weiteren Aspekten betrifft die Erfindung ein Verfahren zur Herstellung eines Filtersacks für eine solche Vorrichtung, sowie einen Filtersack und eine Verwendung eines solchen Filtersacks in einer Vorrichtung zur Bereitstellung und Aufbereitung einer Flüssigkeit. Mit der Erfindung können das Fassungsvermögen eines Filtersacks erheblich besser ausgenutzt und Austauschintervalle deutlich verlängert werden.

### Hintergrund der Erfindung:

Im Baugewerbe sind Vorrichtungen zur Bereitstellung und Aufbereitung von Flüssigkeiten bekannt, die insbesondere auch als «Wasser-Management-Systeme» (WMS) bezeichnet werden. Solche Geräte sind dazu eingerichtet, auf Baustellen anfallende Flüssigkeiten aufzunehmen, zu reinigen und in gereinigter Form wieder abzugeben. Mithin wird mit solchen Vorrichtungen ein Flüssigkeitskreislauf auf einer Baustelle in Betrieb gehalten und dafür gesorgt, dass stets Spül- oder Kühlwasser - beispielsweise für die Durchführung von Kernbohrarbeiten, die beides benötigen - vorhanden ist. Dabei ermöglichen solche Vorrichtungen zur Bereitstellung und Aufbereitung von Flüssigkeiten insbesondere die Durchführung von Kernbohrarbeiten auf solchen Baustellen, auf denen Wasser nicht frei verfügbar ist und die ggf. nicht einfach mit Wasserleitungen zu versorgen sind.

Als Flüssigkeiten werden in Zusammenhang mit der vorliegenden Erfindung insbesondere solche Gemische bezeichnet, die benutztes Spül- oder Kühlwasser, sowie Bohrgut und/oder Staub umfassen. Die so zusammengesetzten Flüssigkeiten können im Sinne der Erfindung bevorzugt auch als "Bohrflüssigkeit" oder "Bohrschlamm" bezeichnet werden. Das Bohrgut und der Staub können von der Konsistenz und Teilchenzusammensetzung höchst inhomogen in Erscheinung treten. Insbesondere die Durchmesser der Bohrgut- und Staubteilchen können um mehrere Größenordnungen, d.h. Zehnerpotenzen, voneinander abweichen. Neben den makroskopischen Bohrgut- und Staubteilchen kann die Bohrflüssigkeit auch Spuren von verschiedenen Chemikalien, wie Reinigungs- oder Kühlmitteln enthalten, die die Funktion der Spül- oder Kühlflüssigkeit verbessern sollen.

Bisher werden in solchen Vorrichtungen zur Bereitstellung und Aufbereitung von Flüssigkeiten Filtersäcke eingesetzt, um die Bohrflüssigkeit aufzunehmen und zu reinigen. Die Vorrichtung zur Bereitstellung und Aufbereitung einer Flüssigkeit kann mit einer Werkzeugmaschine verbunden werden und die bei der Arbeit mit der Werkzeugmaschine entstehenden Bohrgut- und/oder Staubpartikel einsaugen. Dadurch gelangen diese Bohrgut- und/oder Staubpartikel in den Filtersack im Inneren der Vorrichtung zur Bereitstellung und Aufbereitung einer Flüssigkeit. Es hat sich gezeigt, dass insbesondere die kleineren der Bohrgut- und/oder Staubpartikel, d.h. die Bohrgut- und/oder Staubpartikel mit einem vergleichsweise kleinen Durchmesser, in einem oberen Bereich des Filtersacks bzw. der Bohrflüssigkeit innerhalb des Filtersacks in der Schwebe bleiben. Allerdings verschließen gerade diese vergleichsweise kleinen Bohrgut- und/oder Staubpartikel die noch offenen, d.h. durchgängigen Poren im oberen Bereich des Filtersacks der Vorrichtung zur Bereitstellung und Aufbereitung einer Flüssigkeit, wodurch unerwünschterweise die Kapazität des Filtersacks nicht mehr vollumfänglich ausgenutzt werden kann, obwohl der Filtersack noch nicht vollständig gefüllt ist. Dadurch muss der Filtersack häufiger als eigentlich nötig gewechselt werden und die Zeitspanne zwischen zwei Filterwechsel-Vorgängen (Filterwechselintervall) verkürzt sich. Diese verkürzten Filterwechselintervalle reduzieren unerwünschterweise die Arbeitseffektivität und den Arbeitsfortschritt und sind aufwändig und personalintensiv. Außerdem müssen regelmäßig neue Filtersäcke für die Vorrichtung zur Bereitstellung und Aufbereitung einer Flüssigkeit vorgehalten werden.

Die Aufgabe, die der vorliegenden Erfindung zugrunde liegt, besteht darin, die vorstehend beschriebenen Mängel und Nachteile des Standes der Technik zu überwinden und eine Vorrichtung zur Bereitstellung und Aufbereitung einer Flüssigkeit bereitzustellen, mit der ein eingelegter Filtersack länger und besser ausgenutzt werden kann. Darüber hinaus besteht ein Anliegen der Erfindung darin, einen verbesserten Filtersack, ein Herstellungsverfahren dafür und eine Verwendung in einer Vorrichtung zur Bereitstellung und Aufbereitung einer Flüssigkeit anzugeben.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorrichtung zur Bereitstellung und Aufbereitung einer Flüssigkeit vorgesehen, wobei die Flüssigkeit in einem Inneren der Vorrichtung mit einem Filtersack gereinigt und von dem Filtersack aufgenommen werden kann. Die Vorrichtung ist dadurch gekennzeichnet, dass eine Innenseite des Filtersacks zumindest teilweise mit einem Flockungsmittel beschichtet ist. Eine solche Vorrichtung zur Bereitstellung und Aufbereitung einer Flüssigkeit kann beispielsweise auf einer Baustelle eingesetzt werden und zusammen mit einer Werkzeugmaschine betrieben werden. Bei der Arbeit mit einer Werkzeugmaschine können verschiedene Partikel erzeugt werden, beispielsweise beim Bohren, Meißeln, Hämmern oder Schleifen, ohne darauf beschränkt zu sein. Solche Partikel, die im Sinne der Erfindung als «Bohrgut- und/oder Staubpartikel» bezeichnet werden, können Gestein, Mauerwerk, Beton, Holz, Metall oder Stahl umfassen, ohne darauf beschränkt zu sein. Die Bohrgut- und/oder Staubpartikel können insbesondere sehr verschiedene Durchmesser aufweisen. Beispielsweise können die Durchmesser der Bohrgut- und/oder Staubpartikel im Bereich von wenigen Mikrometern (10⁻⁶ m) bis zu wenigen Zentimetern (10⁻² m) liegen.

Es hat sich gezeigt, dass vor allem diejenigen Bohrgut- und/oder Staubpartikel mit einem vergleichsweise kleinen Durchmesser die Filterporen einen oberen Bereich der Filtersäcke, die in Vorrichtungen zur Bereitstellung und Aufbereitung von Flüssigkeiten verwendet werden, verstopfen. Dieses Zusetzen der oberen Poren der Filtersäcke führt nachteiligerweise dazu, dass die Vorrichtungen zur Bereitstellung und Aufbereitung von Flüssigkeiten sehr schnell anzeigen, dass der eingelegte Filtersack ausgetauscht werden sollte. Dies kann teilweise sogar dann passieren, wenn der aktuell eingelegte Filtersack noch nicht vollständig gefüllt ist und noch weiter benutzt werden könnte. Um diesem Mißstand abzuhelfen, hat der Erfinder erkannt, dass ein Flockungsmittel eingesetzt werden kann, um vor allem diejenigen Bohrgut- und/oder Staubpartikel mit einem vergleichsweise kleinen Durchmesser zu verklumpen, so dass sie größere Partikel bilden und schneller als bisher in einen unteren Bereich des Filtersacks absinken, wo sie nicht weiters stören. Es wird im Kontext der vorliegenden Erfindung vorgeschlagenen, dass eine Innenseite des Filtersacks zumindest teilweise mit einem Flockungsmittel beschichtet wird. Beispielsweise kann vor allem der obere Bereich des Filtersacks mit dem Flockungsmittel beschichtet werden. Alternativ kann auch im Wesentlichen die gesamte Innenseite des Filtersacks mit dem Flockungsmittel versehen werden.

Durch die Beschichtung mit dem Flockungsmittel können sich kleinere Partikel in der Flüssigkeit, die in der Vorrichtung zur Bereitstellung und Aufbereitung einer Flüssigkeit aufgenommen ist, leichter zusammen finden und größere Flocken oder Partikel bilden. Diese größeren Flocken oder Partikel senken sich leichter nach unten ab und sammeln sich im Bodenbereich des Filtersacks. Dadurch kann eine bessere Ausnutzung des Filtersacks ermöglicht werden und die Austauschintervall verlängern sich vorteilhafterweise. Dadurch kann die Arbeit mit der Vorrichtung zur Bereitstellung und Aufbereitung einer Flüssigkeit auf einer Baustelle deutlich effizienter und kostengünstiger gestaltet werden.

Es ist im Sinne der Erfindung bevorzugt, dass das Flockungsmittel Polymere und/oder organische Makromoleküle zur Fest-Flüssigtrennung von Flüssigkeiten umfasst. Darüber hinaus kann das Flockungsmittel Flockungshilfsmittel umfassen, die das Ausflocken der Partikel und die Bildung von größeren Partikeln unterstützen. Das Flockungsmittel kann vorzugsweise aus unterschiedlichen Substanzen zusammengesetzt sein und trockene, pulverförmige und/oder flüssige Bestandteile umfassen. Beispielsweise können die pulverförmigen oder flüssigen Bestandteile des Flockungsmittels einen kationischen, anionischen oder nicht-ionischem Ladungscharakter aufweisen. Es ist im Sinne der Erfindung bevorzugt, dass der Filtersack in dem Flockungsmittel eingetaucht werden kann, wenn ein flüssiges Flockungsmittel verwendet wird. Das Material des Filtersacks kann sich dann mit dem bevorzugt flüssigen Flockungsmittel vollsaugen, so dass das Flockungsmittel das Abscheiden der Bohrgut- und/oder Staubpartikel aus dem Flüssigkeits-Bohrgut-Gemisch befördern kann. Bei Verwendung des vollgesogenen Filtersacks kann das Flockungsmittel aus dem Material des Filtersacks austreten und sich mit dem Flüssigkeits-Bohrgut-Gemisch vermischen. Durch die Arbeit mit der Werkzeugmaschine kann das Flüssigkeits-Bohrgut-Gemisch in der Vorrichtung zur Bereitstellung und Aufbereitung einer Flüssigkeit durchgeschüttelt werden, so dass in dem Filtersack des Wasser-Management-Systems Turbulenzen entstehen, die vorteilhafterweise für eine gute Durchmischung des Flüssigkeits-Bohrgut-Gemischs mit dem Flockungsmittel sorgen. Dadurch kann das Abscheiden der Bohrgut- und/ oder Staubpartikel aus dem Flüssigkeits-Bohrgut-Gemisch weiter verbessert werden.

Selbstverständlich kann das Flockungsmittel auch auf andere Weisen appliziert und verwendet werden. Beispielsweise ist es vorstellbar, dass das Flockungsmittel als festes Flockungsmittel auf die Innenseite des Filtersacks aufgebracht wird und bei Verwendung des Wasser-Management-Systems aus dem Filtersack-Material austritt, um sich mit dem Flüssigkeits-Bohrgut-Gemisch zu vermischen. Beispielsweise kann das Flockungsmittel mit einem wasserlöslichen Stoff, wie beispielsweise Gelantine, vermischt werden, um auf die Innenseite des Filtersacks aufgebracht zu werden. Wenn das so applizierte Flockungsmittel mit Wasser aus dem Flüssigkeits-Bohrgut-Gemisch in Kontakt kommt, kann sich der wasserlösliche Stoff auflösen und das Flockungsmittel so in das Flüssigkeits-Bohrgut-Gemisch abgeben bzw. freisetzen.

Es hat sich gezeigt, dass solche Flockungsmittel sehr wirksam in Vorrichtungen zur Bereitstellung und Aufbereitung von Flüssigkeiten bzw. in ihren Filtersäcken eingesetzt werden können. Dies ist insbesondere darauf zurückzuführen, dass durch den Flüssigkeitskreislauf, der von der Vorrichtung zur Bereitstellung und Aufbereitung einer Flüssigkeit aufrechterhalten wird, stets eine gute Durchmischung der Bohrflüssigkeit innerhalb des Filtersacks erfolgt. Im Rahmen dieser guten Durchmischung kann auch das als Beschichtung aufgebrachte Flockungsmittel sehr effektiv innerhalb der Bohrflüssigkeit innerhalb des Filtersacks verteilt werden. Auf diese Weise kann das Flockungsmittel sehr schnell und wirksam wirken und dafür sorgen, dass sich kleinere Bohrgut- und/oder Staubpartikel schnell zusammenfinden und größere Partikel und «Flocken» bilden. Diese größeren und vor allem auch schwereren Partikel sinken dann aufgrund der Schwerkraft schnell zu Boden, d.h. in einen unteren Bereich des Filtersacks, wo die die oberen, noch durchgängigen Poren des Filtersacks nicht verstopfen. Auf diese Weise kann ein Filtersack deutlich länger als bisher verwendet werden und ein unerwünschter Austausch kann vorteilhafterweise hinausgezögert werden.

In einem zweiten Aspekt betrifft die Erfindung ein Verfahren zur Herstellung eines Filtersacks für eine Vorrichtung zur Bereitstellung und Aufbereitung einer Flüssigkeit. Darüber hinaus betrifft die Erfindung einen Filtersack und eine Verwendung des Filtersacks. Die für die Vorrichtung zur Bereitstellung und Aufbereitung einer Flüssigkeit eingeführten Begriffe, Definitionen und technischen Vorteile gelten vorzugsweise für das Herstellungsverfahren, den Filtersack und seine Verwendung analog. Das Herstellungsverfahren ist dadurch gekennzeichnet, dass eine Innenseite des Filtersacks zumindest teilweise mit einem Flockungsmittel beschichtet wird. Der Filtersack und seine Verwendung - insbesondere in einer Vorrichtung zur Bereitstellung und Aufbereitung einer Flüssigkeit - sind dadurch gekennzeichnet, dass eine Innenseite des Filtersacks zumindest teilweise mit einem Flockungsmittel beschichtet ist.

Auf diese Weise können sich kleinere Partikel in der Flüssigkeit leichter zusammen finden und größere Flocken oder Partikel bilden. Diese größeren Flocken oder Partikel senken sich besonders schnell in eine Raumrichtung nach unten ab und sammeln sich im Bodenbereich des Filtersacks. Dadurch kann ein Zusetzen und Verstopfen der oberen durchgängigen Poren des Filtersacks vermieden werden und eine bessere Ausnutzung des Filtersacks gewährleistet werden. Insbesondere hat sich gezeigt, dass die Austauschintervall erfreulicherweise verlängert werden können. Dadurch kann die Arbeit mit der Vorrichtung zur Bereitstellung und Aufbereitung einer Flüssigkeit auf einer Baustelle deutlich effizienter und kostengünstiger gestaltet werden.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:

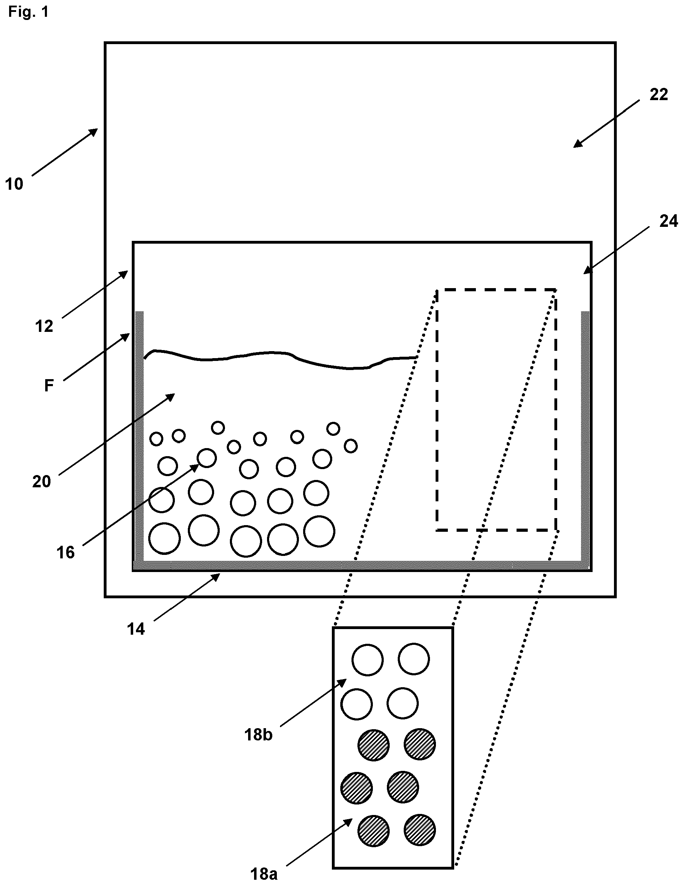

- Fig. 1: Ansicht einer bevorzugten Ausgestaltung der vorgeschlagenen Vorrichtung zur Bereitstellung und Aufbereitung einer Flüssigkeit

### Ausführungsbeispiele und Figurenbeschreibung:

Figur 1 zeigt eine bevorzugte Ausgestaltung der vorgeschlagenen Vorrichtung 10 zur Bereitstellung und Aufbereitung einer Flüssigkeit 20. Im Inneren 22 der Vorrichtung 10, die im Sinne der Erfindung bevorzugt auch als Wasseraufbereitungsanlage oder Wasser-Management-System (WMS) bezeichnet werden kann, ist ein Filtersack 12 eingelegt, in dem sich Flüssigkeit 20 befindet. Bei dieser Flüssigkeit 20 kann es sich um eine Bohrflüssigkeit oder Bohrschlamm handeln, wie bei der Arbeit bei einer Werkzeugmaschine (nicht dargestellt) auf einer Baustelle entstehen kann. Bohrschlamm 20 kann zum Beispiel immer dann entstehen, wenn das Werkzeug oder der Arbeitsort einer Werkzeugmaschine mit einer Kühl- oder Spülflüssigkeit 20 gekühlt und/oder gespült werden muss, beispielsweise bei einem Kernbohrgerät. Dabei können in der Bohrflüssigkeit 20 Bohrgut- oder Staubpartikel 16 mit sehr unterschiedlichen Durchmessern vorkommen. Die Bohrgut- oder Staubpartikel 16 sind in Figur 1 durch die Kreise mit unterschiedlichen Durchmessern angedeutet, die innerhalb des Filtersacks 12 unten links angeordnet sind. Selbst wenn in der Beschreibung der Erfindung häufig von Bohrschlamm und Bohrflüssigkeit die Rede ist, kann die Erfindung selbstverständlich auch für alle anderen Gemische aus Flüssigkeit mit Späne, Teilchen, Staubpartikeln und dergleichen angewendet werden, unabhängig davon, ob sie beim Sägen, Bohren, Meißeln oder Schleifen anfallen, ohne darauf beschränkt zu sein.

Die Größenverteilung der Bohrgut- oder Staubpartikel 16 soll angeben, dass sich große und schwere Bohrgut- oder Staubpartikel 16 eher weiter nach unten absetzen, während sich leichte und kleine Bohrgut- oder Staubpartikel 16 eher in einem oberen Bereich des Filtersacks 12 innerhalb der Bohrflüssigkeit 20 aufhalten.

Der Filtersack 12, der in Figur 1 dargestellt wird, weist auf seiner Innenseite 24 eine Beschichtung 14 auf. Diese Beschichtung 14 umfasst ein Flockungsmittel F, das die Bohrgut- oder Staubpartikel 16 dazu anregt, sich zu Partikeln mit größeren Durchmessern zusammen zu schließen. Die Bohrgut- oder Staubpartikel 16 sollen durch das Flockungsmittel dazu angeregt werden, auszuflocken und größere und schwerere Bohrgut- oder Staubpartikel 16 zu bilden. Der Erfinder hat erkannt, dass solche größeren und schwereren Bohrgut- oder Staubpartikel 16 in dem Filtersack 12 schneller nach unten sinken.

Das Material des in Filtersacks 12 kann Poren 18 aufweisen. Solche Poren 18 sind als Kreise in dem vergrößerten Ausschnitt des Filtersacks 12 in Figur 1 dargestellt. Ohne die Erfindung, d.h. wenn konventionelle Filtersäcke 12 ohne Beschichtung 14 in der Vorrichtung 10 zur Bereitstellung und Aufbereitung einer Flüssigkeit 20 verwendet werden, können sich alle Poren 18 des Filtersacks 12 zusetzen. Zugesetzte Poren 18a sind in Fig. 1 durch eine Schraffur markiert.

Durch die Erfindung, d.h. durch die Vorsehung einer Beschichtung 14 des Filtersacks 12 bzw. seiner Innenseite 24 mit einem Flockungsmittel F kann ein Zusetzen und ein Verstopfen der Poren 18, vor allem im oberen Bereich des Filtersacks 12, wirksam verhindert werden. Dies insbesondere deswegen, weil sich kleine Bohrgut- oder Staubpartikel 16 schneller zu großen Bohrgut- oder Staubpartikel 16 zusammenfinden und auf den Boden des Filtersacks 12 absinken. Dadurch können die Poren 18 des Filtersacks 12, vor allem die Poren 18b im oberen Bereich des Filtersacks 12, offen und für die Bohrflüssigkeit 20 durchgängig bleiben, so dass die Vorrichtung 10 zur Bereitstellung und Aufbereitung einer Flüssigkeit 20 weiter ohne einen Wechsel des Filtersacks 12 arbeiten kann. Auf diese Weise kann die Zeitspanne zwischen zwei Filterwechsein der Vorrichtung 10 zur Bereitstellung und Aufbereitung einer Flüssigkeit 20 wesentlich verlängert und die Arbeit mit einer solchen Vorrichtung 10 erheblich effizienter gestaltet werden.

### Bezugszeichenliste

- 10: Vorrichtung zur Bereitstellung und Aufbereitung einer Flüssigkeit
- 12: Filtersack
- 14: Beschichtung
- 16: Bohrgut- und Staubpartikel
- 18: Poren im Filtersack
- 18a: zugesetzte Poren
- 18b: offene, durchgängige Poren
- 20: Flüssigkeit bzw. Bohrflüssigkeit bzw. Bohrschlamm
- 22: Innenraum der Vorrichtung
- 24: Innenseite des Filtersacks
- F: Flockungsmittel

## Patentansprüche

1. Vorrichtung (10) zur Bereitstellung und Aufbereitung einer Flüssigkeit (20), wobei die Flüssigkeit (20) in einem Inneren (22) der Vorrichtung (10) mit einem Filtersack (12) gereinigt und von dem Filtersack (12) aufgenommen werden kann,
**dadurch gekennzeichnet, dass**
eine Innenseite (24) des Filtersacks (12) zumindest teilweise mit einem Flockungsmittel (F) beschichtet (14) ist.

2. Vorrichtung (10) zur Bereitstellung und Aufbereitung einer Flüssigkeit (20) nach Anspruch 1
**dadurch gekennzeichnet, dass**
das Flockungsmittel (F) Polymere und/oder organische Makromoleküle zur Fest-Flüssigtrennung von Flüssigkeiten (20) umfasst.

3. Verfahren zur Herstellung eines Filtersacks (12) für eine Vorrichtung (10) zur Bereitstellung und Aufbereitung einer Flüssigkeit (20) nach Anspruch 1 oder 2,
**dadurch gekennzeichnet, dass**
eine Innenseite (24) des Filtersacks (12) zumindest teilweise mit einem Flockungsmittel (F) beschichtet (14) wird.

4. Filtersack (12) das nach dem Verfahren gemäß Anspruch 3 hergestellt wird,
**dadurch gekennzeichnet, dass**
eine Innenseite (24) des Filtersacks (12) zumindest teilweise mit einem Flockungsmittel (F) beschichtet (14) ist.

5. Verwendung des Filtersacks (12), das nach dem Verfahren gemäß Anspruch 3 hergestellt wird,
**dadurch gekennzeichnet, dass**
eine Innenseite (24) des Filtersacks (12) zumindest teilweise mit einem Flockungsmittel (F) beschichtet (14) ist.
